Europäisches Patentamt

(19) European Patent Office

Office européen des brevets

(11) EP 0 769 478 A1

## (12) EUROPEAN PATENT APPLICATION

(43) Date of publication:
23.04.1997 Bulletin 1997/17

(51) Int. Cl.$^6$: C02F 3/12, B01D 41/02

(21) Application number: 95202834.8

(22) Date of filing: 20.10.1995

(84) Designated Contracting States:
AT BE CH DE DK ES FR GB GR IE IT LI LU MC NL PT SE
Designated Extension States:
LT LV SI

(71) Applicant: Dorr Oliver B.V.
2132 JC Hoofddorp (NL)

(72) Inventors:
• Beaton, Neil Cameron
Church Eaton (GB)

• Bakker, Richard
NL-1901 CS Castricum (NL)
• Hoeksema, Martin W.
NL-2024 VN Haarlem (NL)
• Brands, Cornelis Karel
NL-1171 JV Badhoevedorp (NL)

(74) Representative: De Hoop, Eric
Octrooibureau Vriesendorp & Gaade
P.O. Box 266
2501 AW Den Haag (NL)

(54) **Process for the removal of organic material from solid particles**

(57) A process for the removal of substantially organic material from the surface of solid particles, wherein the particles to be cleaned are fed to an attrition cell in the form of a slurry so as to remove the greater part of the organic material and subsequently the particles are separated from the removed organic material. Such a process can suitably form part of a process for the treatment of waste water in a biological fluidized bed reactor wherein the fluidized medium consists of solid particles containing biomass on their surface. The thickness of said biomass can be kept between fixed limits by means of the above mentioned process for the removal of substantially organic material from solid particles.

EP 0 769 478 A1

## Description

The present invention relates to a process for the removal of substantially organic material from the surface of solid particles. Solid particles with an adhering organic material can be found in many applications. For exemplifying purposes, in the following the particles used as the fluidized medium in a biological fluidized bed reactor are used to elucidate the invention. The substantially organic material which is used in the said biological fluidized bed (BFB) reactor consists of biologically active medium, also called biomass.

The process of the invention can thus form part of a biological fluidized bed (BFB) system, which is used for aerobic, anoxic or anaerobic treatment of industrial and municipal waste water and contaminated ground waters. It is also used for denitrification of surface and potable water, and water for special industrial processes.

For reduction of biological oxygen demand (BOD) and nitrification in such a system, pure oxygen is added to the waste water. Before entering the reactor the flow is passed through an oxygenator where oxygen concentrations of at least 50 mg/l are achieved in the waste water. The oxygen is fully utilised for aerobic biological treatment.

For denitrification, an organic carbon source, such as methanol, is added to the raw feed water. During this anoxic process, oxidised nitrogen compounds such as nitrate and nitrite are reduced principally to harmless nitrogen gas. Dissolved oxygen is also removed biologically prior to denitrification, thereby achieving the necessary anoxic conditions.

A BFB-system is comprised of a BFB-reactor, containing a fluidized bed of e.g. sand particles having a bio-active film-layer on their surfaces, and an installation to clean the said particles. The system bioreactor consists of a tank partially filled with specially selected sand of approximately 0.4 mm average particle diameter. The diameter of the particles can vary between 0.25 and 0.60 mm. The influent water enters the reactor from below through a distributor system. The sand bed expands due to the upflow, creating a fluidized bed when normal operating conditions have been reached. The fluidized sand bed provides more than 3000 $m^2$ surface area for biological growth per $m^3$ of reactor volume. The large surface area of the fluidized bed in the reactor allows biomass concentrations of 10 - 40 $kg/m^3$, five to ten times higher than those achieved using conventional biological methods. Moreover BFB systems allow higher space loading than is possible using activated sludge processes. This means that hydraulic retention times in the reactor are greatly reduced - less reactor volume can deal with the same flow of raw waste water.

During operation of the bioreactor, biomass sludge grows as a "biofilm" on the surface of the particles suspended in the fluidized bed. This results in active biomass concentrations typically in the range of 10-40 $kg/m^3$ fluidized bed, present as fixed films attached to the sand particles. Related to the weight of sand, the biomass concentration normally is in the range 2.0 - 5.0 % by weight. The extent of biomass growth can be followed by measuring the fluidized bed level achieved at constant upflow velocity. The grown particles result in a reduced specific surface in the BFB-reactor. Therefore, the fluidized bed has to be kept at a constant height. Bed level is maintained constant by removing sand from the top of the bed and scrubbing the biomass from the sand. In principle, e.g if the adhering biomass-layer is too thick to be sufficiently removed or if the biomass is adhering too firmly to the particles, which especially is the case in denitrification processes, the grown particles can be disposed of and new, clean particles can be added to the reactor instead.

For the above reasons it is necessary to remove the biomass-layer from the surface of the particles. Efficient sand scrubbing further is beneficial in that it both maximises the waste biomass sludge concentration and that it reduces the probability for biomass being abraded from recycled sand within the reactor through the natural attrition occurring in the fluidized bed. Also, excessive particle growth will result in particles being carried out of the reactor by the fluidizing liquid.

A variety of techniques have been described for the sand scrubbing operation, such as simple centrifugal pumping, or high shear dispersion machine operation. These methods are not optimum, either due to biomass scrubbing efficiency being too low, or due to the abrasive wear and high energy input resulting from the necessary high rotational speeds. This wear not only can cause premature damage to high shear dispersion machines, but sand particle size is reduced also. This results in the creation of sand "fines" which are recycled to the reactor, and eventually lost from the system via the reactor effluent.

Before returning the scrubbed sand to the reactor, it is necessary to separate the biomass from the sand in a classification device and to wash the sand to remove free biomass. Efficient separation of sand from free biomass with minimum washing liquor consumption is beneficial to the process. The concentration of biomass is maximised, reducing downstream sludge dewatering requirements. The amount of free biomass recycled to the reactor is minimised. This reduces the amount of additional suspended solids entrained with the treated or partially recycled effluent.

An important additional advantage resulting from a reduction in the amount of recycled suspended biomass is that the probability of developing suspended growth in the bioreactor, competing with the fixed film growth on the particles, is reduced.

As mentioned above, in order to achieve the required biological treatment efficiency, many BFB systems require recycle of at least a part of the reactor effluent back to the influent. In such circumstances, the level of suspended solids in the liquor should be minimised to prevent them acting as a seed for suspended growth in the reactor. This can interfere with attached biofilm development and reduce the efficiency of the BFB reactor. It therefore is advantageous to operate the sand-biomass separation system in such a way so as to minimise the introduction of additional suspended solids into the system.

In certain applications, it is necessary to maximise the scrubbed-biomass sludge solids concentration, before going on to downstream thickening and disposal operations. This is achieved through the use of sand scrubbing technology which maximises the scrubbing efficiency, hence increasing the sludge solids content in the separated sludge-containing liquor.

The present invention in general relates to a novel process for the removal of soft predominantly organic material from solid particles. The present invention further describes more specifically a new approach to both sand scrubbing and subsequent biomass separation from sand, utilising equipment and processes previously not applied for this purpose. In this way, the conventional system is significantly improved and optimised. This invention describes a novel way of sand scrubbing so as to optimise scrubbing efficiency for achieving a high sludge solids content, while at the same time eliminating damage to sand particles, and achieving long life-time for the machine components in contact with the abrasive sand slurry.

This invention provides a process for the removal of substantially organic material from the surface of solid particles, characterized in that the particles to be cleaned are fed to an attrition cell in the form of a slurry so as to remove the greater part of the organic material and subsequently the particles are separated from the removed organic material.

Using an attrition cell has several benefits. It is known that the level of adhesion of the biomass to the sand varies from one BFB application to another. For example, in denitrification applications, the biomass can, under some conditions, be particularly difficult to remove, and more intensive scrubbing is necessary for effective operation of the BFB system. It now has been found that even the cleaning of BFB particles from denitrification processes can be provided by attrition cells. It further has shown that a various range of feed sand slurry concentrations can be handled and cleaned with the aid of an attrition cell. This range is from about 150 to 950 g sand /liter slurry.

An additional requirement for rigorous sand scrubbing arises during seasonal shutdowns of BFB denitrification plants. It has been established that reliable and rapid start-up after a shutdown of several months, avoiding the development of unwanted nitrites, is only possible if the complete sand bed is thoroughly scrubbed before the shutdown. The necessary low level of attached biomass concentration (< 0.3 g/100 g sand) is easily obtainable using attrition cell technology in a sand-biomass separation system which is operated continuously until the target level has been reached.

Attrition cells are commonly established for applications requiring the removal of hard surface impurities from mineral sands. The cells consist of a multi-sided tank containing an agitator shaft with two or more sets of impellers located one above the other. Adjacent impellers have opposing pitch, so that the flow of sand slurry in the tank is continuously reversed. The action of the agitator results in intense turbulence which abrades the surface coating. The tank is generally designed with a multi-sided cross-section, e.g. hexagonal or octagonal, to prevent zero-flow zones developing in the slurry, and providing uniform treatment of all particles. The process is normally repeated in several cells, generally with a minimum of two cells in series.

For abrasion protection, the cell wall and bottom are lined with replaceable rubber or plastic wear plates. The wear plates on the impellers of the attrition cell are also replaceable, being made of abrasion resistant materials, such as cast iron or polyurethane.

In operation, slurry flows through the cells arranged in series. Sufficient slurry retention time is allowed in each cell for the attrition process to be effective. There is also normally an optimum sand slurry concentration and power consumption associated with a particular application.

While attrition cells are established for the removal of relatively hard surface coatings from sand, it is well known that soft material such as biomass, can sometimes interfere with the abrasion process by means of a lubricating effect. Surprisingly, experimentation has shown that attrition cells are applicable to biomass scrubbing from sand in BFB systems.

For the reasons described above, it is necessary for proper functioning of the reactor to separate scrubbed sand from the free biomass before returning the sand to the reactor. This is a classification operation which traditionally has been performed by a variety of devices, including screens, hydrocyclones and upflow hydroclassifiers. The hydrocyclone is optionally retained as part of the improved sand biomass separation system for two reasons: (a) it allows pre-thickening of the sand slurry to an optimum concentration to use in the sand scrubbing equipment, such as the attrition cell, and (b) it reduces the flowrate and hence the size of the downstream scrubbing and separation equipment by removal of liquid along with the biomass. However, the separation efficiency of the hydrocyclone is limited, in that (i) there is a practical limit to the sand concentration in the underflow (50-60% w/w sand slurry), and (ii) liquor associated with sand in the underflow still contains the biomass suspended solids, unchanged in concentration.

A significant improvement in degree of separation can be achieved by use of an alternative device, namely a rake or screw classifier which contains both classifying and sand raking sections. Influent liquor is fed to a classifying bowl with sufficient surface area to permit denser solids, such as sand, to settle, while lighter solids, such as biomass, overflow a weir at the surface along with the liquor. The solids are continuously removed from the bowl either by means of a motor-driven reciprocating rake or an extraction screw. The rake or screw extends above the liquid pool area, allowing solids to be transported up a "beach" area, where they can be washed and further deliquored by gravity. Rake/screw classification permits underflow (raked or screwed product) sand concentrations as high as 80-85 % w/w, which consequently contains much less liquor and associated suspended solids than either hydrocyclone underflows or hydroclassifier (upflow) discharges. Moreover, it is possible to efficiently wash the sand, with minimum wash liquor in the rake/screw classifier, to further improve the degree of separation of sand and biomass, and to permit sand and essentially biomass-free liquor to be recycled to the reactor. Compared with upflow washing classifiers, dilution of the biomass is also minimised, facilitating downstream sludge dewatering.

An added benefit of rake/screw classifiers is that they are able to accept a range of feed sand slurry concentrations coming from the BFB reactor, and require no control systems for their reliable operation. This is particularly difficult with upflow classifiers, in which close control over the upflow water is necessary to prevent recycled sand being transferred to the biomass stream.

The overall performance of the classifier can be quantified in terms of a classification efficiency, defined as (wherein SS stands for the amount of suspended solids):

$$1 - \frac{\text{free SS (biomass) weight per unit weight of raked sand product}}{\text{free SS (biomass) weight per unit weight of sand in classifier feed}}$$

This efficiency ratio is maximised by the additional sand dewatering on the classifier beach section, after washing, and to a lesser extent by the use of wash liquor on the classifier deck.

The biomass/water stream may be used to dilute the feed sand slurry to the sand-biomass separation system. In this way, it is possible to reach even higher biomass solids content in the waste sludge.

The return of the dewatered sand from the classifier to the bioreactor is through a vertical sand return pipe located internally or externally in relation to the reactor with outlet at a level below the fully grown fluidized bed surface.

From the attached block flowsheets it follows that the overall process for removing biomass from sand particles, as used in a BFB reactor, has been altered. A high shear dispersion pump has been omitted, the hydrocyclone has optionally been retained, the attrition cell has been added, and the upflow classifier has been replaced by the rake or screw classifier. The novel process will now be eludicated by means of examples.

## Example 1

Sand containing attached biomass was obtained from an operating BFB reactor being used for the denitrification of secondary municipal sewage effluent. Using added methanol as substrate, the concentration of nitrate, expressed as nitrogen, was reduced from 30 mg/l in the influent to < 1.0 mg/l in the effluent. The BFB operating conditions resulted in a sludge (biomass) yield of 0.25 kg TS/kg added methanol (with TS being the total solids amount).

A double attrition cell (30 litres volume per cell) was first operated batch-wise to determine the influence of sand concentration and cell retention time on scrubbing efficiency, which is measured by determining the change in the % attached volatile suspended solids (AVSS) on the sand. It was shown that at sand slurry concentrations in the range 500 - 850 g/litre, the % AVSS could be reduced from 2.4% down to less than 0.5% (83% scrubbing efficiency), with a cell retention time of 2 minutes per cell. In continuous tests with bed sand at a slurry concentration of 400 g/litre, the attrition cell was demonstrated as having the capability of achieving scrubbing efficiencies of over 60% with shorter retention times of about 1 minute per single cell.

## Example 2

Sand containing attached biomass was obtained from an operating BFB reactor which is used for the denitrification of surface potable water. Using methanol as added substrate, the concentration of nitrate, expressed as nitrogen, was reduced from 20 mg/litre in the influent to < 1.0 mg/litre in the effluent. The operating conditions resulted in a sludge (biomass) yield of 0.25 kg TS/kg added methanol (TS= total solids).

Batchwise operation of a 30 litre attrition cell (double cell) indicated that at any given retention time, the scrubbing efficiency increased as the sand concentration increased, up to approximately 600 g/litre. Starting with an attached biomass concentration (AVSS) of 2.5 %, the sand could be scrubbed to the range 0.15-0.30% with a sand slurry retention time of less than 1 minute. This corresponds to 84 - 92% scrubbing efficiency, estimated as corresponding to about 80 - 85% in continuous operation, based on two stirred tank mixers in series.

A sample of sand was subjected to attrition for 1-5 minutes and the particle size distribution was compared with that of the reactor sand. No detectable difference was found.

## Example 3

Sand slurry containing attached biomass was extracted from the BFB plant and scrubbed as described in Example 1, thereby creating free biomass SS. The scrubbed sand was fed to a 14" wide rake classifier, with a settling pool area of 0.5 m$^2$.

The concentration of free biomass SS in the feed was in the range of 1 - 5 g/litre of liquor and the sand slurry concentration was 400 g/litre slurry. With a feed slurry flow rate of 7 m$^3$/h, and a wash flow of 0.27 m$^3$/h, classification efficiencies (as defined above) of over 90% were achieved. This means that more than a 10-fold reduction in the amount of free biomass recycled to the reactor was possible.

If compared with the conventional process for removing the biomass from sand particles, the present process shows considerable advantages and improvements. It now is easy to obtain biomass concentrations of 0.15 - 0.30% with relatively short retention times. With the present invention it is easy to obtain any desired biomass concentration on the sand particles.

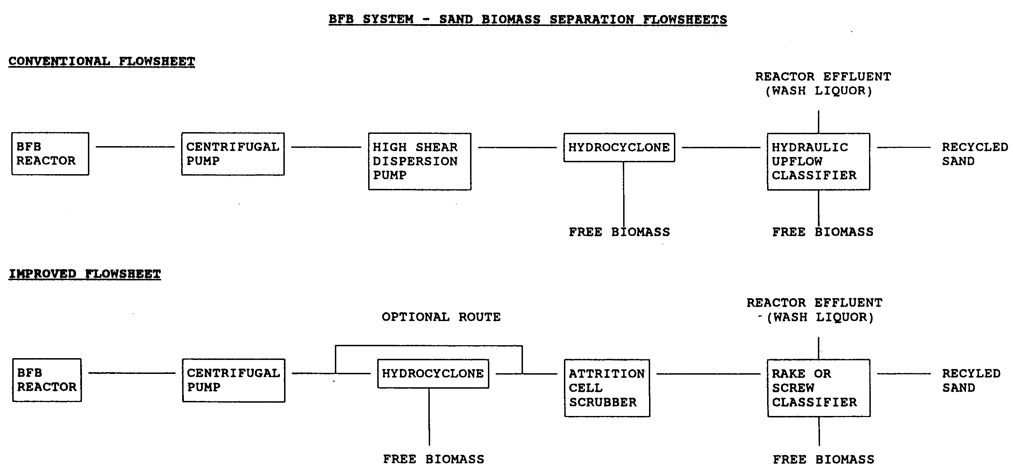

**Claims**

1. A process for the removal of substantially organic material from the surface of solid particles, <u>characterized in that</u> the particles to be cleaned are fed to an attrition cell in the form of a slurry so as to remove the greater part of the organic material and subsequently the particles are separated from the removed organic material.

2. A process as claimed in claim 1, <u>characterized in that</u> the separation is conducted in a rake classifier or a screw classifier.

3. A process as claimed in any of the preceding claims, <u>characterized in that</u> the essentially separated free organic material containing liquor is efficiently thickened, collected, recycled for dilution purposes and removed.

4. A process as claimed in claim 1, <u>characterized in that</u> the solid particles are sand particles having a diameter of between 0.25 and 0.60 mm.

5. A process as claimed in claim 4, <u>characterized in that</u> the sand particles have an average diameter of about 0.4 mm.

6. A process as claimed in claim 4 or 5, <u>characterized in that</u> the feed sand slurry concentration is from about 150 to 950 gram sand/liter slurry.

7. A process as claimed in any of the preceding claims, <u>characterized in that</u> the attrition cell has been provided with a protective lining.

8. A process as claimed in claim 7, <u>characterized in that</u> impellers forming part of the attrition cell have been provided with the lining as well.

9. A process as claimed in claim 7 or 8, <u>characterized in that</u> the lining consists of polyurethane.

10. A biological process for the treatment of water or waste water in a biological fluidized bed reactor wherein the fluidized medium consists of solid particles containing a biologically active medium on their surface, the thickness of which is kept between fixed limits by means of the process as claimed in any of claim 1 to 9.

11. A process as claimed in claim 10, wherein the cleaning process is carried out such that the bed height in the fluidized bed reactor is kept between fixed limits.

12. A process as claimed in claim 10 or 11, wherein the cleaned particles contain less than 0.3 g biologically active medium per 100 g particles.

## BFB SYSTEM - SAND BIOMASS SEPARATION FLOWSHEETS

### CONVENTIONAL FLOWSHEET

REACTOR EFFLUENT
(WASH LIQUOR)

```
┌──────────┐   ┌──────────────┐   ┌──────────────┐   ┌──────────────┐   ┌──────────────┐
│ BFB      │───│ CENTRIFUGAL  │───│ HIGH SHEAR   │───│ HYDROCYCLONE │───│ HYDRAULIC    │─── RECYCLED
│ REACTOR  │   │ PUMP         │   │ DISPERSION   │   │              │   │ UPFLOW       │    SAND
│          │   │              │   │ PUMP         │   │              │   │ CLASSIFIER   │
└──────────┘   └──────────────┘   └──────────────┘   └──────────────┘   └──────────────┘
                                                            │                  │
                                                      FREE BIOMASS       FREE BIOMASS
```

### IMPROVED FLOWSHEET

OPTIONAL ROUTE

REACTOR EFFLUENT
(WASH LIQUOR)

```
┌──────────┐   ┌──────────────┐   ┌──────────────┐   ┌──────────────┐   ┌──────────────┐
│ BFB      │───│ CENTRIFUGAL  │───│ HYDROCYCLONE │───│ ATTRITION    │───│ RAKE OR      │─── RECYLED
│ REACTOR  │   │ PUMP         │   │              │   │ CELL         │   │ SCREW        │    SAND
│          │   │              │   │              │   │ SCRUBBER     │   │ CLASSIFIER   │
└──────────┘   └──────────────┘   └──────────────┘   └──────────────┘   └──────────────┘
                                         │                                     │
                                   FREE BIOMASS                          FREE BIOMASS
```

EP 0 769 478 A1

6

**European Patent Office**

# EUROPEAN SEARCH REPORT

Application Number

EP 95 20 2834

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP-A-0 007 783 (ECOLOTROL) 6 February 1980<br>* page 15, line 22 - page 16, line 15 *<br>* page 20, line 22 - page 21, line 4 *<br>* claims 1,4 *<br>--- | 1,10,11 | C02F3/12<br>B01D41/02 |
| A | EP-A-0 612 695 (ENVIREX) 31 August 1994<br>* column 3, line 36 - column 4, line 3 *<br>* column 7, line 36 - line 49 *<br>--- | 1,10,11 | |
| A | US-A-3 855 120 (GARBO P) 17 December 1974<br>* column 4, line 37 - line 59 *<br>----- | 1,3,4 | |
| | | | **TECHNICAL FIELDS SEARCHED** (Int.Cl.6)<br><br>C02F<br>B01D |

The present search report has been drawn up for all claims

| Place of search | Date of completion of the search | Examiner |
|---|---|---|
| THE HAGUE | 25 March 1996 | Gonzalez Arias, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)